(19) **Europäisches Patentamt European Patent Office Office européen des brevets**

(11) **EP 4 715 638 A1**

(12) ## EUROPÄISCHE PATENTANMELDUNG

(43) Veröffentlichungstag:
**25.03.2026 Patentblatt 2026/13**

(21) Anmeldenummer: **24201942.0**

(22) Anmeldetag: **23.09.2024**

(51) Internationale Patentklassifikation (IPC):
**$G06F\ 21/12^{(2013.01)}$**    **$G06F\ 8/40^{(2018.01)}$**
**$G06F\ 8/41^{(2018.01)}$**    **$G06F\ 9/44^{(2018.01)}$**
**$G06F\ 9/455^{(2018.01)}$**    **$G06F\ 21/50^{(2013.01)}$**
**$G06F\ 21/51^{(2013.01)}$**    **$G06F\ 21/52^{(2013.01)}$**
**$G06F\ 21/53^{(2013.01)}$**    **$G06F\ 21/54^{(2013.01)}$**

(52) Gemeinsame Patentklassifikation (CPC):
**G06F 21/50; G06F 21/12; G06F 21/121;**
**G06F 21/51; G06F 21/52; G06F 21/53; G06F 21/54;**
G06F 8/42; G06F 8/43; G06F 9/45516; G06F 11/36;
G06F 11/3604; G06F 11/3612; G06F 11/3624;
G06F 21/64;      (Forts.)

(84) Benannte Vertragsstaaten:
**AL AT BE BG CH CY CZ DE DK EE ES FI FR GB
GR HR HU IE IS IT LI LT LU LV MC ME MK MT NL
NO PL PT RO RS SE SI SK SM TR**
Benannte Erstreckungsstaaten:
**BA**
Benannte Validierungsstaaten:
**GE KH MA MD TN**

(71) Anmelder: **Siemens Aktiengesellschaft**
**80333 München (DE)**

(72) Erfinder:
• **Baierlein, Michael**
**91174 Spalt (DE)**

• **Horn, Christoph**
**90562 Heroldsberg (DE)**
• **Lomakin, Alexander**
**90455 Nürnberg (DE)**
• **Remy, Oliver**
**91054 Erlangen (DE)**
• **Stein, Alexander**
**90587 Veitsbronn (DE)**

(74) Vertreter: **Siemens Patent Attorneys**
**Postfach 22 16 34**
**80506 München (DE)**

(54) **AUSFÜHREN VON ANWENDUNGEN AUF EINEM SICHEREN SYSTEM EINER INDUSTRIELLEN ANLAGE**

(57) Die Erfindung betrifft ein computer-implementiertes Verfahren, eine computer-implementierte Vorrichtung, ein System und ein Computerprogrammprodukt zum Ausführen einer Anwendung auf einem sicheren System einer industriellen Anlage umfassend Empfangen, durch das sichere System, zumindest einer Anweisung, welche mit der Anwendung assoziiert ist, Interpretieren und/oder Kompilieren der zumindest einen Anweisung, durch das sichere System, um die Anweisung in die Anwendung zu überführen und Verifizieren, durch das sichere System, der erhaltenen Anwendung.

FIG 2

EP 4 715 638 A1

(52) Gemeinsame Patentklassifikation (CPC): (Forts.)
G06F 2221/033; G06F 2221/034

**Beschreibung**

Die vorliegende Erfindung betrifft ein computer-implementiertes Verfahren, eine computer-implementierte Vorrichtung, ein System und ein Computerprogrammprodukt zum Ausführen einer Anwendung auf einem sicheren System.

Das Ausführen von Software, z.B. von Steuerungssoftware, auf einer industriellen Einheit (z.B. einer Maschine, welche zur Fertigung von Produkten eingesetzt wird), unterliegt häufig besonderen Anforderungen. Um ein unerwünschtes Fehlverhalten der Software zu verhindern, ist es erforderlich, stets ein Ausführen der Software unter kontrollierten Bedingungen sicherstellen zu können.

Probleme beim Ausführen von Software unter kontrollierten Bedingungen kann z.B. dadurch resultieren, dass eine Korruption übermittelter Datenpakete von einer Entwicklungseinheit (z.B. einem Entwickler-PC) auf die industrielle Einheit auftritt. Dies kann z.B. zumindest teilweise aus einer unzureichenden Signalqualität der verwendeten Datenübertragung (kabelgebunden oder kabellos) hervorgehen. Zusätzlich oder alternativ können unerwünschte Integritätsverletzungen durch unautorisierte Dritte hervorgerufen werden, welche einen Programmablauf einer entsprechenden Software in unerwünschter und ggf. undefinierter Weise beeinflussen können.

Auch wenn eine Übertragung einer Software von einer Entwicklungseinheit auf die industrielle Einheit ohne eine Verletzung der Integrität der Datenpakete erfolgt ist, so kann es dennoch zu unberechenbaren Zuständen der Software im Programmablauf kommen. Dies kann z.B. dann der Fall sein, wenn eine Berechnung eines Ablaufschritts durch einen die Software ausführenden Prozessor fehlerhaft ist. In einigen Fällen kann ein Fehlverhalten der verwendeten Hardware zu einem fehlerhaften Ausführen der betreffenden Software führen.

Hieraus lässt sich schließen, dass für das Ausführen von Software auf einem sicheren System eine Vielzahl komplexer Rahmenbedingungen erfüllt sein muss, um stets ein kontrolliertes Ausführen der betreffenden Software gewährleisten zu können. Dies führt zu einer komplexen und aufwendigen Softwareentwicklung und/oder Ausführen der Software. Dies kann wiederum mit einem aufwendigen, kostenintensiven Entwicklungsprozess der betreffenden Software einhergehen und/oder damit, dass der Funktionsumfang der betreffenden Software eingeschränkt ist, um auf diese Weise einem möglichen Fehlverhalten durch eine reduzierte Funktionalität entgegenwirken zu können.

Ein Sicherstellen einer kontrollierten Softwareausführung kann ferner eine Vielzahl von Tests während des Softwareentwicklungsprozesses erfordern (um z.B. ein mögliches Fehlverhalten frühzeitig aufdecken zu können und, um so in der zu entwickelnden Software entsprechende Routinen vorsehen zu können, welche einem derartigen Fehlverhalten entgegenwirken können). Zusätzlich oder alternativ können Entwicklungsrichtlinien formuliert werden, basierend auf welchen die Entwicklung erfolgen soll.

Wird hingegen auf generisch bereitgestellte Software zurückgegriffen, so ist ein Coded Processing ohne technische Hürden meist nicht möglich, da essentielle Funktionen fehlen, wie z.B. Gleitkommazahlen, trigonometrische Funktionen, Arrays, Schleifen, If-Else-Konstrukte, etc.). Unter Coded Processing kann ein Verfahren zur Erhöhung der Ausführungssicherheit von Computerprogrammen verstanden werden, das insbesondere in sicherheitskritischen Anwendungen eingesetzt wird. Es kann funktionale Programmcodes um eine arithmetische Kodierung von Variablen, Konstanten und Operationen erweitern. Dieses Verfahren ermöglicht die Erkennung von transienten, permanenten und systematischen Fehlern während der Programmausführung, einschließlich Hardware- und Software-Ausführungsfehlern. Coded Processing ist hardwareunabhängig und bietet eine kontinuierliche End-to-End-Absicherung des Programmablaufs. Es kann so konzipiert sein, dass es auf Standard-Hardware ausgeführt werden kann und dabei einen hohen Diagnosedeckungsgrad erreicht.

Aus Anwendersicht ist somit immer zwischen einer Selbstentwicklung von Software mit hohem Aufwand aber ggf. vollem Funktionsumfang oder einer generisch programmierbaren Lösung mit eingeschränktem Funktionsumfang zu wählen. Dies lässt somit den Schluss zu, dass gegenwärtige Lösungen zum Ausführen von Software auf einem sicheren System nicht in allen Fällen eine gewünschte Funktionalität ermöglichen.

Es besteht daher ein Bedarf einer Verbesserung des kontrollierten und deterministischen Ausführens von Software in einem industriellen Kontext.

Die vorliegende Erfindung stellt sich daher die Aufgabe die Sicherheit und Zuverlässigkeit des Ausführensvon Software auf einem sicheren System zu verbessern.

Gemäß einem ersten Aspekt wird ein computer-implementiertes Verfahren zum Ausführen einer Anwendung auf einem sicheren System einer industriellen Anlage vorgeschlagen. Das computer-implementierte Verfahren kann ein Empfangen, durch das sichere System, zumindest einer Anweisung, welche mit der Anwendung assoziiert ist sowie ein Interpretieren und/oder Kompilieren der zumindest einen Anweisung, durch das sichere System, um die Anweisung in die Anwendung zu überführen, umfassen. Ferner kann das computer-implementierte Verfahren ein Verifizieren, durch das sichere System, der erhaltenen Anwendung umfassen.

Unter einer industriellen Anlage kann vorliegend ein Teil (z.B. eine Maschine) einer industriellen Fertigungsstraße verstanden werden. Die industrielle Fertigungsstraße kann sich dadurch auszeichnen, dass diese maßgeblich dazu beiträgt, ein oder mehrere Edukte zu einem Produkt zu verarbeiten.

In einigen Fällen kann das Empfangen ferner ein Ausführen einer Integritätsprüfung umfassen. Die Integritätsprüfung kann eine cyclic redundancy check-, CRC-, Prüfung umfassen. Auf diese Weise kann sichergestellt werden, dass eine möglicherweise während der Übertragung der zumindest einen Anweisung auftretende Korruption des mit der Übertragung assoziierten Datenpakets bestimmt werden kann und damit eine möglicherweise auftretende Veränderung der zumindest einen Anweisung nicht unentdeckt bleibt.

Unter einem Interpretieren kann ein Prozess verstanden werden, bei dem eine Anweisung, welche in einer höheren Programmiersprache geschrieben ist, zur Laufzeit von einem Interpreter analysiert und direkt ausgeführt wird, anstatt zuvor in Maschinensprache übersetzt zu werden. Dabei kann ein bereitgestellter Interpreter den mit der Anweisung assoziierten Quellcode Zeile für Zeile analysieren und sie unmittelbar ausführen. Dies kann ein flexibles und dynamisches Ausführen von Programmen ermöglichen, da Änderungen am Quellcode sofort wirksam werden, ohne dass eine erneute Kompilierung erforderlich ist. Ein Interpretieren kann eine einfache Fehlersuche und ein plattformunabhängiges Ausführen ermöglichen, da der gleiche Quellcode auf verschiedenen Systemen interpretiert werden kann.

Unter Kompilieren kann ein Prozess verstanden werden, bei dem eine in einer höheren Programmiersprache formulierte, zumindest eine Anweisung in Maschinensprache oder einen maschinennahen Code übersetzt wird, der direkt von einem Computer ausgeführt werden kann. Dieser Vorgang kann von einem speziellen Programm, einem Compiler, durchgeführt werden, welcher entsprechend bereitgestellt werden kann. Der Kompilierungsprozess kann mehrere Phasen, darunter eine lexikalische Analyse, eine syntaktische Analyse, eine semantische Analyse, eine Codeoptimierung und eine Codegenerierung umfassen. Das Ergebnis des Kompilierens kann ein ausführbares Programm oder eine Objektdatei sein, die effizienter und schneller ausgeführt werden kann als z.B. interpretierter Code. Kompilierte Anwendungen können eine bessere Leistung und Sicherheit bieten, da der Quellcode nicht zur Laufzeit verfügbar ist. Der Kompilierungsprozess kann eine frühzeitige Erkennung von Fehlern im Quellcode erkennen und kann Optimierungen vornehmen und so die Effizienz und Leistung der resultierenden Anwendung verbessern.

Das Verifizieren kann ein systematisches Überprüfen und Sicherstellen umfassen, dass eine Anwendung (oder ein Teil der Anwendung) spezifizierten Anforderungen korrekt und vollständig erfüllt sowie gemäß vorgegebener Standards entwickelt wurde. Dieser Prozess kann eine Aktivitäten und Methoden umfassen, einschließlich, aber nicht beschränkt auf, eine Durchführung von Unit-Tests, Integrationstests und Systemtests zur Funktionalitätsüberprüfung auf verschiedenen Ebenen, eine Durchführung von Code-Reviews und Inspektionen zur systematischen Prüfung des Quellcodes auf Fehler und Einhaltung von Programmierstandards, eine Anwendung statischer Code-Analyse zur automatisierten Überprüfung des Quellcodes auf potenzielle Probleme und Sicherheitslücken, eine Überprüfung einer Konformität mit Industriestandards und regulatorischen Anforderungen, eine Analyse von Artefakten wie Dokumentationen, Spezifikationen und Designdokumenten auf Vollständigkeit und Korrektheit sowie eine Sicherstellung der Rückverfolgbarkeit von Anforderungen durch den gesamten Entwicklungsprozess. Das Verifizieren kann darauf abzielen, Fehler frühzeitig im Entwicklungszyklus zu identifizieren und zu beheben, die Codequalität zu verbessern und sicherzustellen, dass die erhaltene Anwendung den definierten Spezifikationen entspricht.

Aktuell verwendete, sichere Systeme, weisen häufig den Nachteil auf, dass diese lediglich eine (stark) reduzierten Funktionsumfang ermöglichen. Dies kann zumindest teilweise dadurch hervorgerufen werden, dass diese häufig auf einer Ganzzahl-Arithmetik basieren. Dies kann mit einer reduzierten Berechnungsgenauigkeit, einer reduzierten Brauchbarkeit für wissenschaftliche Anwendungen und Berechnungen, mit einem limitierten für Berechnungen zur Verfügung stehenden Zahlenbereich, Speicherüberlaufproblematiken, Skalierungsproblemen und erhöhter Komplexität bei der Implementierung von Workarounds einhergehen.

Durch Übertragen der zumindest einen Anweisung auf das sichere System und Interpretieren und/oder Kompilieren der zumindest einen Anweisung auf dem sicheren System, kann sichergestellt werden, dass die erhaltene Anwendung den Sicherheitsstandards des sicheren Systems genügt und z.B. nicht mehr durch eine Übertragung (z.B. über einen Kommunikationskanal) der erhaltenen Anwendung in negativer Weise beeinflusst wird. Auf diese Weise kann ein effizientes und deterministisches Ausführen der erhaltenen Anwendung auf dem sicheren System und damit auf der industriellen Anlage sichergestellt werden.

Gemäß einer Ausführungsform kann das Empfangen ein Empfangen der zumindest einen Anweisung als Zeichenkette umfassen.

Die Zeichenkette kann aus einem Serialisieren der zumindest einen Anweisung hervorgehen.

Durch Empfangen der zumindest einen Anweisung als Zeichenkette kann ein effizientes Übertragen der betreffenden zumindest einen Anweisung ermöglicht werden, da diese, z.B. insbesondere keine Konvertierung in eine binäre Darstellung, keine komplexe Rechenoperationen erfordert.

Gemäß einer weiteren Ausführungsform kann die Anwendung eine generische Anwendung sein.

Eine generische Anwendung im Sinne der vorliegenden Erfindung bezeichnet eine Anwendung (z.B. ein Computerprogramm oder eine Softwarekomponente), die so konzipiert ist, dass sie mit einer Vielzahl von Datentypen operieren kann, ohne dass ein Quellcode für jeden spezifischen Datentyp separat implementiert werden muss. Diese Anwendung zeichnet sich durch hohe Wiederverwendbarkeit aus, indem sie die Nutzung des Codes für verschiedene Datentypen ohne Duplizierung oder Modifikation ermöglicht. Trotz Flexibilität kann die generische Anwendung Typsicherheit zur Kompilierzeit gewährleisten und mit abstrakten Datentypen arbeiten, die erst bei der konkreten Verwendung spezifiziert werden. Die Anwendung ist in der Lage, mit unterschiedlichen Datentypen umzugehen, solange diese bestimmte vorgegebene Anforderungen erfüllen, was ihre Flexibilität verbessern kann. Durch die Vermeidung von Code-Duplikation kann die generische Anwendung zu einer Effizienzsteigerung beitragen, indem sie eine Codebase reduziert und eine Wartbarkeit verbessern kann. Die Implementierung solcher Anwendungen kann unter Verwendung von Konzepten wie Generics, Templates oder parametrischem Polymorphismus ermöglicht werden.

Die Verwendung einer generischen Anwendung kann es Entwicklern ermöglichen, flexiblere und wiederverwendbare Softwarekomponenten zu erstellen, die in verschiedenen Kontexten eingesetzt werden können, ohne den Code für jeden spezifischen Anwendungsfall neu implementieren zu müssen. Dies kann zu einer verbesserten, zielgerichteteren Anpassung von Code über den Zeitverlauf hinweg beitragen.

Gemäß einer weiteren Ausführungsform kann das sichere System eine sichere Berechnungseinheit und einen Intermediate Language Compiler umfassen.

Die sichere Berechnungseinheit kann mit mehr als einem Prozessor, bzw. mehr als einer central processing unit (CPU), bereitgestellt werden.

Unter einem Intermediate Language Compiler kann ein Softwaresystem verstanden werden, das Quellcode (z.B. die zumindest eine Anweisung) einer Hochsprache in eine plattformunabhängige Zwischensprache (Intermediate Language) übersetzt, bevor diese in ausführbaren Maschinencode umgewandelt wird (z.B. durch Interpretieren und/oder Kompilieren). Dieser Intermediate Language Compiler kann eine mehrstufige Transformation des Quellcodes durchführen, beginnend mit der lexikalischen und syntaktischen Analyse, gefolgt von der Generierung eines abstrakten Syntaxbaums und der Erzeugung der Zwischensprache. Die resultierende Intermediate Language stellt eine maschinenunabhängige Repräsentation der Anwendung dar, die optimiert und für verschiedene Zielplattformen weiterverarbeitet werden kann. Der Intermediate Language Compiler kann Mechanismen zur Typüberprüfung, Fehlerbehandlung und zur Generierung von Metadaten, die für das spätere Ausführen oder die weitere Verarbeitung der Zwischensprache nützlich sein können, umfassen. Durch Verwenden einer Intermediate Language kann der Intermediate Language Compiler eine effiziente plattformübergreifende Entwicklung unterstützen, indem er eine gemeinsame Basis für verschiedene Quellsprachen und Zielarchitekturen schafft und somit die Komplexität der Codegenerierung für multiple Plattformen reduzieren kann.

Dies kann in effizienter Weise zu einem sicheren Ausführen der erhaltenen Anwendung beitragen. Die Verwendung eines Intermediate Language Compilers ermöglicht eine Entwicklung der zumindest einen Anweisung in Textform (z.B. gegenüber der Entwicklung in Assemblercode), was zu einer verbesserten Qualität und verbesserter Fehlervermeidung während der Entwicklung beitragen kann.

Gemäß einer weiteren Ausführungsform kann das Empfangen ein Empfangen von einer Entwicklereinheit, bevorzugt über eine programmierbare Logikeinheit, PLC, umfassen.

Die Entwicklereinheit kann z.B. als ein Computer bereitgestellt werden, welcher mit Mitteln zur Entwicklung der zumindest einen Anwendung bereitgestellt ist. Die Mittel zur Entwicklung können z.B. einen Editor (zur Software- bzw. Anweisungs- bzw. Anwendungsentwicklung) umfassen und/oder ein Software Development Kit (SDK). In einigen Fällen kann die Entwicklereinheit auch als Server, als Tablet und/oder ein Smartphone bereitgestellt werden. Die Entwicklereinheit kann sich räumlich getrennt von der industriellen Anlage befinden und z.B. über ein Internet und/oder ein Intranet auf die industrielle Anlage zugreifen (kabellos und/oder kabelgebunden).

Unter einer programmierbaren Logikeinheit (PLC) kann eine digitale Steuerungseinrichtung verstanden werden, die speziell für den Einsatz in industriellen Automatisierungsumgebungen konzipiert sein kann. Die PLC kann einen Mikroprozessor, Speichermodule für Programm- und Datenspeicherung, Ein- und Ausgabeschnittstellen zur Kommunikation mit externen Geräten und Sensoren sowie eine robuste, für industrielle Umgebungen geeignete Gehäusekonstruktion umfassen. Die PLC kann konfiguriert sein, benutzerdefinierte Steuerungsprogramme auszuführen, die in einer speziellen Programmiersprache, wie beispielsweise Ladder Logic, Funktionsbausteinsprache oder Strukturiertem Text, geschrieben sind. Sie kann die Echtzeitverarbeitung von Signalen und die Steuerung von Prozessen durch die zyklische Abarbeitung des gespeicherten Programms.

Ferner kann durch die Trennung von Entwicklereinheit und sicherem System auf der Entwicklungsprozess der zumindest einen Anweisung bzw. der erhaltenen Anwendung weiter vereinfacht werden. Dies kann z.B. daraus resultieren, dass ein Entwickler nicht mehr aufwendige Zertifizierungsprozesse durchlaufen muss, die für die Softwareentwicklung (insbesondere bei der Verwendung von Gleitkommazahlen) erforderlich sind.

Bei typischen Anwendungen mit Gleitkommazahlen stehen einem Safety-Entwickler meist nur mathematischen Grundfunktionen (z.B. Addition, Subtraktion, etc.) zur Verfügung. Komplexere mathematische Funktionen müssen meist aufwändig in Ganzzahl-Arithmetik implementiert und nachfolgend auch zertifiziert werden. Viele dieser Funktionen können zumindest teilweise basierend auf dem hier vorgestellten computer-implementierten Verfahren nun auf einer sicheren Ausführungsplattform bereits zertifiziert bereitgestellt werden, so dass sich die Zertifizierung auf die korrekte Verwendung dieser Funktionen beschränkt und damit vereinfacht werden kann.

Auf diese Weise kann eine logische und auch räumliche Trennung von Anweisungs- bzw. Anwendungsentwicklung und einer entsprechenden Anweisungsausführung erreicht werden. Dies kann insgesamt zu einer Effizienzsteigerung des Ausführens und/oder der Entwicklung führen, da die mit dem Ausführen bzw. der Entwicklung assoziierten Einheiten für ihren jeweiligen Einsatz optimiert werden können. Ferner müssen bei der Entwicklung der Anweisungen keine strengen Anforderungen hinsichtlich des sicheren Ausführens der betreffenden Anwendung eingehalten werden, da das Interpretieren bzw. Kompilieren der Anwendung erst auf dem sicheren System erfolgt. Insbesondere kann dadurch auch eine Entwicklung der zumindest einen Anweisung in einer Entwicklungsumgebung auf z.B. der Entwicklereinheit erfolgen, welche den Entwicklern selbst bereits bekannt ist und diesen dadurch ein bekanntes Umfeld bietet.

Gemäß einer weiteren Ausführungsform kann die zumindest eine Anweisung eine Gleitkommazahl-Berechnungsvorschrift, z.B. bevorzugt eine trigonometrische Funktion, umfassen.

Unter einer trigonometrischen Funktion kann z.B. die Berechnung eines Sinus, Cosinus, Tangens, Cotangens und/oder deren respektiver Umkehrfunktionen (in Abhängigkeit eines bereitgestellten Parameters, welcher als Argument für die jeweilige trigonometrische Funktion verwendet wird) verstanden werden.

Die Berechnung, unter Verwenden der trigonometrischen Funktion, kann z.B. mit einer Bewegung eines Roboterarms und/oder einer Rotation einer Entität der industriellen Anlage assoziiert sein.

Insbesondere kann dies die Berechnung einer Gleitkommazahl-Arithmetik ermöglichen. Die Verwendung des hierin vorgestellten computer-implementierten Verfahrens ist dabei nicht alleinig auf trigonometrische Funktionen beschränkt, sondern kann auch Additionen, Subtraktionen, Multiplikationen und/oder Divisionen von Gleitkommazahlen umfassen. Ferner kann es auch möglich sein, entsprechende Gleitkommazahl-basierte Operationen mittels Potenzen, Wurzen und/oder logarithmische Funktionen auszuführen. Das hierin vorgestellte Verfahren ist jedoch nicht auf diese mathematischen Operationen beschränkt, sondern kann auch auf weitere mathematische Funktionen angewandt werden.

Die Verwendung einer Gleitkommazahl-Arithmetik kann dahingehend Vorteile bieten, als das diese stets eine gleichbleibende relative Genauigkeit ausgeführter Operationen ermöglicht, während dies bei Ganzzahl-Operationen in der Regel nicht gegeben ist (z.B. kann eine Genauigkeit davon abhängen, ob wie groß verwendete ganzzahlige Eingangsgrößen sind).

Um bei der Ganzzahl-Arithmetik sinnvolle Ergebnisse zu erreichen, kann es daher erforderlich sein, verwendete Werte manuell zu skalieren. Dabei ist der Skalierungsfaktor unter Berücksichtigung des maximalen Wertebereichs zur Vermeidung von Überläufen, oft abhängig vom tatsächlichen Wert, zu bestimmen. Nachfolgend kann es erforderlich sein, im weiteren Verlauf mit skalierten Werten fortzufahren. Dabei kann es erforderlich sein darauf zu achten, dass vor einer Operation, die zu einem Überlauf führen kann, eine Rück- oder Umskalierung erfolgt. Diese notwendige Behandlung von Ganzzahlwerten ist aufwändig, fehleranfällig, erzeugt einen sehr hohen Test- und damit Zertifizierungsaufwand. Die resultierende Anwendung kann dadurch schwer lesbar und damit schlecht wartbar werden.

Dies kann ein Überwinden der Limitierung des häufig im Kontext der Entwicklung sicherer Anwendungen verwendeten Coded Processings auf Ganzzahlberechnungen (Integer) ermöglichen und insbesondere auch die Berechnung von Gleitkommazahl-basierten Anwendungen ermöglichen. Somit kann in effizienter Weise der Funktionsumfang erhaltener Anwendungen erweitert werden.

Gemäß einer weiteren Ausführungsform kann das sichere System eine sichere Steuerungseinheit, bevorzugt für eine industrielle Fertigungseinheit, umfassen.

Die Steuerungseinheit kann konfiguriert sein zumindest einen Teilprozess eines mit der industriellen Anlage assoziierten Fertigungsprozesses zu steuern (z.B. eine Bewegung eines Roboterarms, eine Bandgeschwindigkeit eines Förderbandes, etc.), wobei der Teilprozess z.B. durch die industrielle Fertigungseinheit (als Teil der industriellen Anlage) ausgeführt werden kann.

Auf diese Weise kann ein sicheres Ausführen einer Steuerungsanwendung auf einer betreffenden Steuerung realisiert werden.

Gemäß einer weiteren Ausführungsform kann das computer-implementierte Verfahren ferner ein Anpassen der Anwendung zur Laufzeit, mittels einer Mensch-Computer-Schnittstelle, an situative Erfordernisse, bevorzugt ohne ein erneutes Interpretieren und/oder Kompilieren der zumindest einen Anweisung umfassen.

Das Anpassen der Anwendung kann sich auf ein Einstellen eines mit dem Ausführen der Anwendung assoziierten Parameters beziehen. So kann es in einigen Fällen möglich sein, z.B. situative Parameter einer Steuerungsanwendung anzupassen (wie z.B. eine Produktdefinition zu hinterlegen bzgl. des mittels der industriellen Anlage herzustellenden Produkts, eine Umgebungstemperatur einzustellen, etc.) ohne ein erneutes Interpretieren und/oder Kompilieren der Anwendung vornehmen zu müssen.

Die Mensch-Computer-Schnittstelle kann als Mikrofon, Lautsprecher, Tastatur, Maus, Touchscreen und/oder als ein anderes geeignetes Ein- bzw. Ausgabemittel bereitgestellt werden.

Auf diese Weise kann eine effiziente Anpassung der Anwendung an situative Gegebenheiten (und zur Laufzeit der Anwendung) erreicht werden, ohne auf ein sicheres Ausführen der Anwendung verzichten zu müssen und/oder ein ggf. zeitaufwendiges Interpretieren und/oder Kompilieren der Anwendung in Kauf nehmen zu müssen.

Gemäß einer weiteren Ausführungsform kann eine mit der erhaltenen Anwendung assoziierte Befehlsabfolge unveränderbar sein.

Die Reihenfolge, der mit der erhaltenen Anwendung assoziierten Befehle kann statisch sein, d.h., eine Änderung der Reihenfolge nach dem Interpretieren bzw. Kompilieren der zumindest einen Anwendung kann nicht möglich sein. Mögliche Änderungsmöglichkeiten der Anwendung können sich z.B. auf einzelnen Parameteranpassungen (z.B. zur Laufzeit) beschränken.

Dies kann eine Unveränderbarkeit der erhaltenen Anwendung unterstützen und ein nachträgliches (unerwünschtes) Verändern der Anwendung unterbinden. Somit kann das sichere Ausführen der erhaltenen Anwendung weiter unterstützt werden und undefinierte und unerwünschte Zustände der erhaltenen Anwendung in deren Ablauf unterbunden werden.

Gemäß einer weiteren Ausführungsform kann das computer-implementierte Verfahren ferner ein Ausführen der erhaltenen Anwendung umfassen, wobei das Ausführen je eine Berechnung einer Berechnungsvorschrift auf zumindest zwei getrennten Prozessoren, bevorzugt auf zumindest zwei getrennten central processing units, CPUs, des sicheren Systems umfasst. Das computer-implementierte Verfahren kann ferner ein Bestimmen umfassen, ob die zumindest zwei Berechnungen identisch sind und ein Feststellen, dass die Berechnung sicher ist, wenn bestimmt wurde, dass die zumindest zwei Berechnungen identisch sind.

Die zumindest zwei Prozessoren können Teil einer sicheren Berechnungseinheit sein.

Möglicherweise auftretende Berechnungsdiskrepanzen zwischen den zumindest zwei CPUs können z.B. durch Strahlungsschäden (z.B. verursacht durch Neutroneneinschläge auf ein Halbleitermaterial der zumindest zwei CPUs) im Halbleitermaterial der zumindest zwei CPUs hervorgerufen werden.

Das sichere System kann somit mehr als einen Prozessorkern bzw. mehr als eine CPU umfassen. Die somit zumindest zwei vorliegenden Prozessorkerne können so konfiguriert sein, dass diese redundant zueinander sind und eine redundante Berechnung der Berechnungsvorschrift vornehmen können. Die redundante Berechnung der Berechnungsvorschrift kann verwendet werden, um einen Abgleich der so erhaltenen Ergebnisse durchzuführen und um damit auf eine möglicherweise fehlerhafte Berechnung der Berechnungsvorschrift durch zumindest einen der Prozessorkerne schließen zu können und die betreffende fehlerhafte Berechnung korrigieren zu können bevor diese ggf. mit Konsequenzen für einen Produktionsablauf der industriellen Anlage verbunden ist.

Gemäß einer weiteren Ausführungsform kann das computer-implementierte Verfahren ein Initiieren, zumindest teilweise basierend auf der erhaltenen Anwendung, einer zyklischen Kommunikation zwischen dem sicheren System und der Entwicklereinheit und/oder der PLC umfassen.

Unter einer zyklischen Kommunikation kann vorliegend eine Kommunikation zwischen dem sicheren System und der Entwicklereinheit und oder der PLC verstanden werden, welche sich dadurch auszeichnet, dass jede durch einen Sender initiierte Kommunikation durch eine korrespondierende Bestätigungsnachricht, durch einen Empfänger, welche den fehlerfreien Erhalt der Kommunikation bestätigt, auszeichnet.

Auf diese Weise kann auch nach einem Erhalten der Anwendung eine weiterführende, sichere Kommunikation zwischen dem sicheren System und einer Entwicklereinheit und/oder der PLC ermöglicht werden, sodass auch ein Daten- und/oder Informationsaustausch mit einer ausgeführten Anwendung ermöglicht werden kann.

Gemäß eines zweiten Aspekts wird ein Computerprogrammprodukt vorgeschlagen. Das Computerprogrammprodukt kann Befehle umfassen, die bei dem Ausführen des Programms durch einen Computer diesen veranlassen, das computer-implementierte Verfahren wie hierin beschrieben durchzuführen.

Ein Computerprogrammprodukt, wie z.B. ein Computerprogramm-Mittel, kann beispielsweise als Speichermedium, wie z.B. Speicherkarte, USB-Stick, CD-ROM, DVD, oder auch in Form einer herunterladbaren Datei von einem Server in einem Netzwerk bereitgestellt oder geliefert werden. Dies kann zum Beispiel in einem drahtlosen Kommunikationsnetzwerk durch die Übertragung einer entsprechenden Datei mit dem Computerprogrammprodukt oder dem Computerprogramm-Mittel erfolgen.

Gemäß eines dritten Aspekts wird eine computer-implementierte Vorrichtung zum Ausführen einer Anwendung auf einem sicheren System einer industriellen Anlage vorgeschlagen. Die computer-implementierte Vorrichtung umfasst eine Empfangseinheit zum Empfangen, durch das sichere System, zumindest einer Anweisung, welche mit der Anwendung assoziiert ist sowie eine Interpretierungseinheit zum Interpretieren und/oder eine Kompilierungseinheit zum Kompilieren der zumindest einen Anweisung, durch das sichere System, um die Anweisung in die Anwendung zu überführen. Ferner umfasst die computer-implementierte Vorrichtung eine Verifizierungseinheit zum Verifizieren, durch das sichere System, der erhaltenen Anwendung.

Die jeweilige Einheit, zum Beispiel die Empfangseinheit und/oder die Interpretations- und/oder die Kompilierungseinheit und/oder die Verifizierungseinheit, kann hardwaretechnisch und/oder auch softwaretechnisch implementiert sein. Bei einer hardwaretechnischen Implementierung kann die jeweilige Einheit als Vorrichtung oder als Teil einer Vorrichtung, zum Beispiel als Computer oder als Mikroprozessor oder als Steuerrechner eines Fahrzeuges ausgebildet sein. Bei einer softwaretechnischen Implementierung kann die jeweilige Einheit als Computerprogrammprodukt, als eine Funktion, als eine Routine, als Teil eines Programmcodes oder als ausführbares Objekt ausgebildet sein.

Unter einem sicheren System kann ein System verstanden werden, das eine Vielzahl von Sicherheitsstrategien und -maßnahmen implementiert, um die Verfügbarkeit des Systems und seiner Ressourcen zu gewährleisten, unerlaubten Zugriff auf das System und seine Daten zu verhindern und unberechtigte Veränderungen an Systemkomponenten und Informationen zu unterbinden. Das System kann Schutzmechanismen gegen externe Angriffe und interne Bedrohungen umfassen, die sowohl die Hardware- als auch die Softwarekomponenten sowie die darin verarbeiteten Daten abdecken. Es kann die Vertraulichkeit, Integrität und Verfügbarkeit der im System gespeicherten und verarbeiteten Informationen durch eine

Implementierung von Authentifizierungsmechanismen, einschließlich, aber nicht beschränkt auf, starke Passwörter und Mehr-Faktor-Authentifizierung, regelmäßige und automatisierte Sicherheitsaktualisierungen, den Einsatz von Netzwerksicherheitstechnologien wie Firewalls, die Integration von Schadsoftware-Erkennungs- und -Abwehrmechanismen sowie die Verwendung von Datenverschlüsselungstechnologien umfassen. Darüber hinaus verfügt das System über Selbstschutzmechanismen, die eine kryptographische Signierung von Systemkomponenten ermöglichen und eine verschlüsselte Speicherung des Betriebssystems und kritischer Daten gewährleisten. Schließlich kann das System adaptive Sicherheitsmechanismen, die kontinuierlich auf neue Bedrohungen und Schwachstellen überwacht werden und dynamisch an sich ändernde Sicherheitsanforderungen angepasst werden können umfassen.

Das sichere System kann ferner so beschaffen sein, dass es verlässlich und deterministisch eine ihm zum Ausführen übergebene Anwendung ausführt. Dies kann z.B. ein automatisches und zuverlässiges Stoppen eines Ablaufs z.B. der Anwendung umfassen, wenn festgestellt wird, dass ein undefinierter und/oder unerwünschter Zustand im Ablauf der Anwendung aufgetreten ist. Zusätzlich oder alternativ kann z.B. basierend auf dem sicheren System ein Bewegungsablauf eines Roboterarms und/oder Krans sichergestellt werden.

Die computer-implementierte Vorrichtung kann ferner eine Ausführungseinheit zum Ausführen des Computerprogrammprodukts wie hierin beschrieben und/oder eine weitere Ausführungseinheit zum Ausführen der Schritte des computer-implementierten wie hierin beschrieben umfassen.

Die Ausführungseinheit und/oder die weitere Ausführungseinheit kann z.B. als Computer, Prozessor, Field Programmable Gate Array (FPGA) oder eine Kombination davon vorgesehen sein.

Gemäß eines vierten Aspekts wird ein System zum Ausführen einer Anwendung auf einem sicheren System einer industriellen Anlage vorgeschlagen. Das System kann die computer-implementierte Vorrichtung, wie hierin beschrieben, und das Computerprogrammprodukt, wie hierin beschrieben, umfassen.

Das Computerprogrammprodukt kann in der Computer-implementierten Vorrichtung enthalten sein. In alternativen Beispielen kann das Computerprogramm auch in einer von der Computerimplementierten Vorrichtung entfernt vorgehaltenen Einheit enthalten sein. In letzterem beispielhaft genannten Fall kann die Computer-implementierte Vorrichtung über ein Netzwerk (z.B. ein lokales Netzwerk oder das Internet) oder eine USB-Verbindung auf das Computerprogrammprodukt zugreifen.

Auch wenn (bevorzugte) Ausführungsformen der vorliegenden Erfindung hierin isoliert voneinander beschrieben werden, so können diese dennoch miteinander kombiniert werden.

Die für die vorgeschlagene Vorrichtung beschriebenen Ausführungsformen und Merkmale gelten für das vorgeschlagene Verfahren entsprechend und umgekehrt.

Weitere mögliche Implementierungen der Erfindung umfassen auch nicht explizit genannte Kombinationen von zuvor oder im Folgenden bezüglich der Ausführungsbeispiele beschriebenen Merkmale oder Ausführungsformen. Dabei wird der Fachmann auch Einzelaspekte als Verbesserungen oder Ergänzungen zu der jeweiligen Grundform der Erfindung hinzufügen.

Weitere vorteilhafte Ausgestaltungen und Aspekte der Erfindung sind Gegenstand der Unteransprüche sowie der im Folgenden beschriebenen Ausführungsbeispiele der Erfindung. Im Weiteren wird die Erfindung anhand von bevorzugten Ausführungsformen unter Bezugnahme auf die beigelegten Figuren näher erläutert.

Fig. 1 zeigt ein exemplarisches industrielles System;

Fig. 2 zeigt ein exemplarisches Ablaufdiagramm einer Sequenz zum Ausführen einer Anwendung;

Fig. 3 zeigt ein exemplarisches Ablaufdiagramm eines computer-implementierten Verfahrens;

Fig. 4 zeigt eine exemplarische computer-implementierte Vorrichtung; und

Fig. 5 zeigt ein System.

In den Figuren sind gleiche oder funktionsgleiche Elemente mit denselben Bezugszeichen versehen worden, sofern nichts anderes angegeben ist.

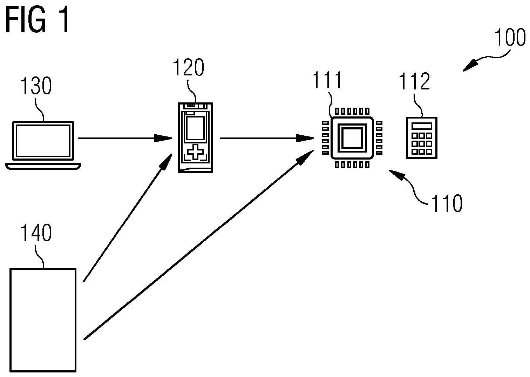

Fig. 1 zeigt ein exemplarisches industrielles System 100 aus welchem ein Zusammenwirken der hierin beschriebenen Komponenten ersichtlich wird.

Das industrielle System 100 umfasst ein sicheres System 110, wie hierin beschrieben. Das sichere System 110 kann eine Berechnungseinheit 111 und (optional) eine Steuerungseinheit 112 umfassen. Die Berechnungseinheit 111 kann einen oder mehrere Prozessorkerne bzw. central processing units (CPUs) umfassen.

Ferner kann das industrielle System 100 eine programmierbare Logikeinheit (PLC) 120 umfassen. Die PLC 120 kann mit dem sicheren System 110 in unidirektionaler Kommunikation sein, d.h. eine Kommunikation zwischen der PLC 120 und dem sicheren System 110 kann so eingerichtet sein, dass Daten lediglich von der PLC 120 zu dem sicheren System 110 gesendet werden, jedoch nicht umgekehrt. Alternativ können die PLC 120 und das sichere System 110 auch derart bereitgestellt werden, dass diese in bidirektionaler Kommunikation miteinander stehen können.

Das industrielle System 100 kann ferner eine Entwicklereinheit 130 umfassen. Entwicklereinheit 130 kann, wie hierin beschrieben, z.B. als Computer (z.B. als PC) bereitgestellt werden, welcher mit einer Softwareentwicklungsumgebung bereitgestellt ist.

Die Entwicklereinheit 130 kann in einigen Fällen direkt mit dem sicheren System 110 kommunizieren (nicht in Fig. 1 dargestellt). Zusätzlich oder alternativ kann die Entwicklereinheit 130 jedoch über die PLC 120 mit dem sicheren System 110 kommunizieren. Im letztgenannten Fall kann die PLC 120 somit als Relay für Daten fungieren, welche von der Entwicklereinheit über die PLC 120 an das sichere System 110 gesendet werden sollen (und/oder umgekehrt).

Das industrielle System kann ferner eine Mensch-Computer-Schnittstelle 140 umfassen. Die Mensch-Computer-Schnittstelle 140 kann wie hierin beschrieben bereitgestellt werden.

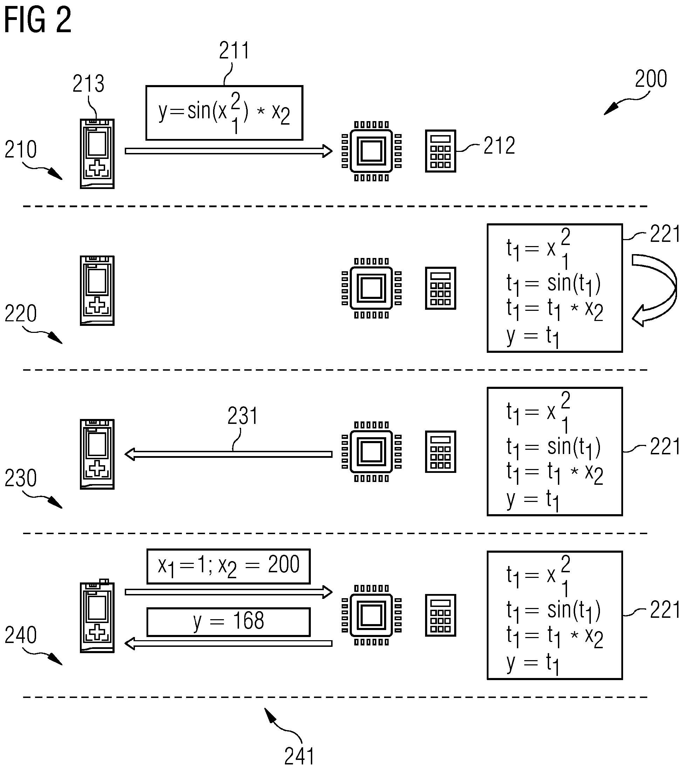

Fig. 2 zeigt ein exemplarisches Ablaufdiagramm einer Sequenz 200 zum Ausführen einer Anwendung 221 auf einem sicheren System 212.

Die Sequenz umfasst einen ersten Sequenzschritt 210, in welchem zumindest eine Anweisung 211 wie hierin beschrieben bereitgestellt wird und z.B. eine Berechnungsvorschrift, z.B. eine trigonometrische Funktion umfasst, wie z.B. $y = \sin(x_1^2) \cdot x_2$ . Die Anweisung 211 kann von einer Entwicklereinheit 213 (welche identisch zur Entwicklereinheit130 bereitgestellt werden kann) und/oder einer PLC 213 (wie hierin beschrieben) bereitgestellt werden.

Die Sequenz 200 umfasst ferner einen zweiten Sequenzschritt 220. Das sichere System 212 kann derart bereitgestellt werden, dass dieses die zumindest eine Anweisung 211 durch Interpretieren und/oder Kompilieren der Anweisung 211 in eine Anwendung 221 umwandelt. Anwendung 221 kann dabei eine Befehlsabfolge umfassen, so dass Anweisung 211 durch das sichere System 212 verarbeitbar wird bzw. prozessiert werden kann. In einigen Fällen kann das Interpretieren und/oder Kompilieren auch ein Aufschlüsseln der Anweisung 211 umfassen. Anweisung 211 kann dabei in die Therme

$t_1 = x_1^2$ , $t_1 = \sin(t_1)$, $t_1 = t_1 \cdot x_2$ und $y = t_1$ aufgeteilt

werden, welche in dieser Reihenfolge beim Ausführen der Anwendung 221 durchlaufen werden können.

Die Sequenz 200 umfasst ferner einen dritten Sequenzschritt 230. In Sequenzschritt 230 erfolgt ein Verifizieren 231 der Anwendung 221. Das Verifizieren 231 kann durch Kommunikation mit der Entwicklereinheit 213 (bzw. der PLC) erfolgen. Das Verifizieren 231 kann ein Bestimmen umfassen, ob die erhaltene Anwendung 221 die Funktionalität aufweist, welche durch das Design der zumindest einen Anweisung 211 (bei dessen Entwicklung) angedacht war.

Die Sequenz 200 kann ferner einen vierten Sequenzschritt 240 umfassen. Im vierten Sequenzschritt 240 kann eine zyklische Kommunikation 241 zwischen dem sicheren System 212 und der Entwicklereinheit 213 und/oder einer PLC 213 erfolgen. Die zyklische Kommunikation 241 kann implementiert sein wie hierin beschrieben.

Die zyklische Kommunikation kann z.B. so ausgestaltet sein, dass die Entwicklereinheit 213 und/oder die PLC 213 die beiden Werte $x_1 = 1$ sowie $x_2 = 200$ mit der Bitte um Berechnung eines Wertes y, basierend auf der Anwendung 221, an das sichere System 212 übermittelt. Basierend auf den erhaltenen Werten $x_1$ und $x_2$ kann das sichere System 212 unter Verwendung der Anwendung 221 den Wert y ermitteln. Dies ergibt im hierin diskutierten Fall den Wert y = 168. Dieser kann nachfolgend von dem sicheren System 212 an die Entwicklereinheit 213 bzw. die PLC 213 übermittelt werden.

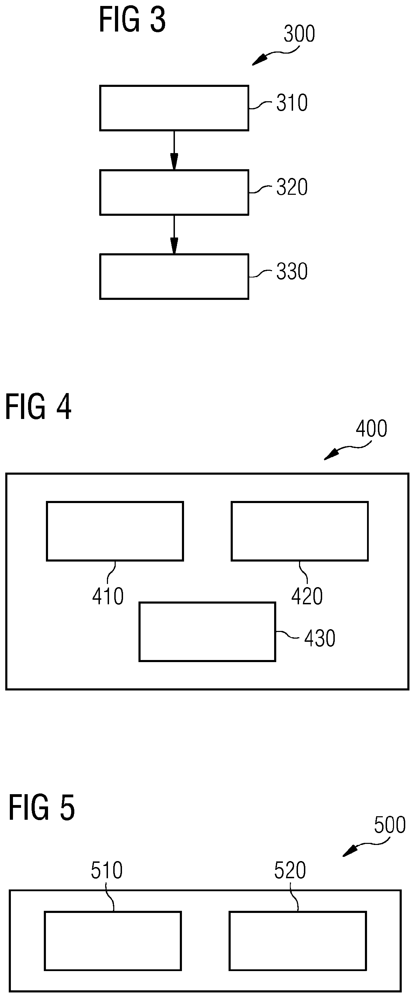

Fig. 3 zeigt ein Ablaufdiagramm eines exemplarischen Computer-implementierten Verfahrens 300 zum Ausführen einer Anwendung auf einem sicheren System einer industriellen Anlage.

In Schritt 310 erfolgt ein Empfangen, durch das sichere System, zumindest einer Anweisung, welche mit der Anwendung assoziiert ist.

In Schritt 320 erfolgt ein Interpretieren und/oder Kompilieren der zumindest einen Anweisung, durch das sichere System, um die Anweisung in die Anwendung zu überführen.

In Schritt 330 erfolgt ein Verifizieren, durch das sichere System, der erhaltenen Anwendung.

Fig. 4 zeigt eine exemplarische Computer-implementierte Vorrichtung 400 zum Ausführen einer Anwendung auf einem sicheren System einer industriellen Anlage. Die Computer-implementierte Vorrichtung 400 umfasst eine Empfangseinheit 410, eine Interpretierungseinheit bzw. eine Kompilierungseinheit 420 sowie eine Verifizierungseinheit 430.

Die Empfangseinheit 410 ist konfiguriert zum Empfangen, durch das sichere System, zumindest einer Anweisung, welche mit der Anwendung assoziiert ist.

Die Interpretierungseinheit bzw. die Kompilierungseinheit 420 ist konfiguriert zum Interpretieren bzw. Kompilieren der zumindest einen Anweisung, durch das sichere System, um die Anweisung in die Anwendung zu überführen.

Die Verifizierungseinheit 430 ist konfiguriert zum Verifizieren, durch das sichere System, der erhaltenen Anwendung.

Fig. 5 zeigt ein exemplarisches System 500 zum Ausführen einer Anwendung auf einem sicheren System einer industriellen Anlage. Das System 500 beinhaltet eine Computer-implementierte Vorrichtung 510 und ein Computerprogrammprodukt 520.

Die Computer-implementierte Vorrichtung 510 kann konfiguriert sein, wie hierin beschrieben.

Das Computerprogrammprodukt 520 kann konfiguriert sein, wie hierin beschrieben.

Obwohl die vorliegende Erfindung anhand von Ausführungsbeispielen beschrieben wurde, ist sie vielfältig modifizierbar.

Unabhängig vom grammatikalischen Geschlecht eines bestimmten Begriffes sind Personen mit männlicher, weiblicher oder anderer Geschlechteridentität mit umfasst.

Bezugszeichenliste

| | |
|---|---|
| 100 | industrielles System |
| 110 | sicheres System |
| 111 | Berechnungseinheit |
| 112 | Steuerungseinheit |
| 120 | programmierbare Logikeinheit (PLC) |
| 130 | Entwicklereinheit |
| 140 | Mensch-Computer-Schnittstelle |
| 200 | Sequenz |
| 210 | Sequenzschritt |
| 211 | Anweisung |
| 212 | sicheres System |
| 213 | Entwicklereinheit/PLC |
| 220 | Sequenzschritt |
| 221 | Anwendung |
| 230 | Sequenzschritt |
| 231 | Verifizieren |
| 240 | Sequenzschritt |
| 241 | zyklische Kommunikation |
| 300 | computer-implementiertes Verfahren |
| 310 | Schritt |
| 320 | Schritt |
| 330 | Schritt |
| 400 | computer-implementierte Vorrichtung |
| 410 | Empfangseinheit |
| 420 | Interpretierungseinheit- bzw. Kompilierungseinheit |
| 430 | Verifizierungseinheit |
| 500 | System |
| 510 | computer-implementierte Vorrichtung |
| 520 | Computerprogrammprodukt |

**Patentansprüche**

1. Computer-implementiertes Verfahren (300) zum Ausführen einer Anwendung auf einem sicheren System einer industriellen Anlage, umfassend:

   Empfangen (310), durch das sichere System, zumindest einer Anweisung, welche mit der Anwendung assoziiert ist;
   Interpretieren und/oder Kompilieren (320) der zumindest einen Anweisung, durch das sichere System, um die Anweisung in die Anwendung zu überführen;
   Verifizieren (330), durch das sichere System, der erhaltenen Anwendung.

2. Computer-implementiertes Verfahren nach Anspruch 1, wobei das Empfangen ein Empfangen der zumindest einen Anweisung als Zeichenkette umfasst.

3. Computer-implementiertes Verfahren nach einem der Ansprüche 1 oder 2, wobei die Anwendung eine generische Anwendung ist.

4. Computer-implementiertes Verfahren nach einem der Ansprüche 1-3, wobei das sichere System eine sichere Berechnungseinheit und einen Intermediate Language Compiler umfasst.

5. Computer-implementiertes Verfahren nach einem der Ansprüche 1-4, wobei das Empfangen ein Empfangen, von einer Entwicklereinheit, bevorzugt über eine programmierbare Logikeinheit, PLC, umfasst.

6. Computer-implementiertes Verfahren nach einem der Ansprüche 1-5, wobei die zumindest eine Anweisung eine Gleitkommazahl-Berechnungsvorschrift, bevorzugt eine trigonometrische Funktion, umfasst.

7. Computer-implementiertes Verfahren nach einem der Ansprüche 1-6, wobei das sichere System eine sichere Steuerungseinheit, bevorzugt für eine industrielle Fertigungseinheit, umfasst.

8. Computer-implementiertes Verfahren nach einem der Ansprüche 1-7, ferner umfassend:
   Anpassen der Anwendung zur Laufzeit, mittels einer Mensch-Computer-Schnittstelle, an situative Erfordernisse, bevorzugt ohne ein erneutes Interpretieren und/oder Kompilieren der zumindest einen Anweisung.

9. Computer-implementiertes Verfahren nach einem der Ansprüche 1-8, wobei eine mit der erhaltenen Anwendung assoziierte Befehlsabfolge unveränderbar ist.

10. Computer-implementiertes Verfahren nach einem der Ansprüche 1-9, ferner umfassend:

Ausführen der erhaltenen Anwendung, wobei das Ausführen je ein Berechnen einer Berechnungsvorschrift auf zumindest zwei getrennten Prozessoren, bevorzugt auf zumindest zwei getrennten central processing units, CPUs, des sicheren Systems umfasst;

Bestimmen, ob die zumindest zwei Berechnungen identisch sind;

Feststellen, dass die Berechnung sicher ist, wenn bestimmt wurde, dass die zumindest zwei Berechnungen identisch sind.

11. Computer-implementiertes Verfahren nach einem der Ansprüche 1-10, ferner umfassend:
Initiieren, zumindest teilweise basierend auf der erhaltenen Anwendung, einer zyklischen Kommunikation zwischen dem sicheren System und der Entwicklereinheit und/oder der PLC.

12. Computerprogrammprodukt, umfassend Befehle, die beim Ausführen des Programms durch einen Computer diesen veranlassen, das computer-implementierte Verfahren nach einem der Ansprüche 1-11 auszuführen.

13. Computer-implementierte Vorrichtung (400) zum Ausführen einer Anwendung auf einem sicheren System einer industriellen Anlage, umfassend:

Eine Empfangseinheit (410) zum Empfangen, durch das sichere System, zumindest einer Anweisung, welche mit der Anwendung assoziiert ist;
Eine Interpretierungseinheit (420) zum Interpretieren und/oder eine Kompilierungseinheit (420) zum Kompilieren der zumindest einen Anweisung, durch das sichere System, um die Anweisung in die Anwendung zu überführen;
Eine Verifizierungseinheit (430) zum Verifizieren, durch das sichere System, der erhaltenen Anwendung.

14. Computer-implementierte Vorrichtung nach Anspruch 13, ferner umfassend:

Eine Ausführungseinheit zum Ausführen des Computerprogrammprodukts nach Anspruch 12; und/oder
Eine weitere Ausführungseinheit zum Ausführen der Schritte des computer-implementierten Verfahrens nach einem der Ansprüche 1-11.

15. System (500) zum Ausführen einer Anwendung auf einem sicheren System einer industriellen Anlage, umfassend:

Die computer-implementierte Vorrichtung (510) nach einem der Ansprüche 13 oder 14; und

Das Computerprogrammprodukt (520) nach Anspruch 12.

FIG 1

# FIG 2

**210** — **213**, **211**: $y = \sin(x_1^2) * x_2$ → **212**, **200**

**220** — **221**:
$$t_1 = x_1^2$$
$$t_1 = \sin(t_1)$$
$$t_1 = t_1 * x_2$$
$$y = t_1$$

**230** — **231** ←, **221**:
$$t_1 = x_1^2$$
$$t_1 = \sin(t_1)$$
$$t_1 = t_1 * x_2$$
$$y = t_1$$

**240** — $x_1 = 1; x_2 = 200$ →, $y = 168$ ←, **221**:
$$t_1 = x_1^2$$
$$t_1 = \sin(t_1)$$
$$t_1 = t_1 * x_2$$
$$y = t_1$$

**241**

## FIG 3

300

310

320

330

## FIG 4

400

410

420

430

## FIG 5

500

510

520

**EUROPÄISCHER RECHERCHENBERICHT**

Europäisches Patentamt
European Patent Office
Office européen des brevets

Nummer der Anmeldung

EP 24 20 1942

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | CA 2 996 747 A1 (ENSILO LTD [IL]) 5. September 2018 (2018-09-05) | 1,2,5-7, 9,11-15 | INV. G06F21/12 |
| Y | * Abbildungen 1-3 * * Absatz [0005] * * Absatz [0036] * | 3,4,10 | G06F8/40 G06F8/41 G06F9/44 |
| | ----- | | G06F9/455 |
| Y | DE 10 2014 115947 A1 (INTEL CORP [US]) 3. Juni 2015 (2015-06-03) * Abbildungen 1-7 * * Absatz [0002] * | 3 | G06F21/50 G06F21/51 G06F21/52 G06F21/53 |
| | ----- | | G06F21/54 |
| Y | CN 101 763 280 A (ICS TRIPLEX ISAGRAF INC) 30. Juni 2010 (2010-06-30) * Abbildungen 1-10 * | 4 | |
| | ----- | | |
| Y | JP 2009 009537 A (RENESAS TECH CORP) 15. Januar 2009 (2009-01-15) * Absatz [0030] * | 10 | |
| | ----- | | |
| A | WEIWU HU ET AL: "Godson-3: A Scalable Multicore RISC Processor with x86 Emulation", IEEE MICRO, IEEE SERVICE CENTER, LOS ALAMITOS, CA, US, Bd. 29, Nr. 2, 1. März 2009 (2009-03-01), Seiten 17-29, XP011255015, ISSN: 0272-1732 * Seite 1 - Seite 3 * | 1-15 | RECHERCHIERTE SACHGEBIETE (IPC) G06F |
| | ----- | | |
| A | US 2019/340379 A1 (BEECHAM JAMES DOUGLAS [US]) 7. November 2019 (2019-11-07) * Abbildungen 1-13 * | 1-15 | |
| | ----- | | |

Der vorliegende Recherchenbericht wurde für alle Patentansprüche erstellt

| Recherchenort | Abschlußdatum der Recherche | Prüfer |
|---|---|---|
| München | 19. November 2024 | Shibli, Kamel |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
......................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

**EP 24 20 1942**

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

**19-11-2024**

| Im Recherchenbericht angeführtes Patentdokument | | Datum der Veröffentlichung | Mitglied(er) der Patentfamilie | | Datum der Veröffentlichung |
|---|---|---|---|---|---|
| CA 2996747 | A1 | 05-09-2018 | CA | 2996747 A1 | 05-09-2018 |
|  |  |  | EP | 3373133 A1 | 12-09-2018 |
|  |  |  | HK | 1255149 A1 | 09-08-2019 |
|  |  |  | IL | 257893 A | 30-04-2018 |
|  |  |  | JP | 2018152061 A | 27-09-2018 |
|  |  |  | SG | 10201801669X A | 30-10-2018 |
|  |  |  | US | 2018253549 A1 | 06-09-2018 |
| DE 102014115947 | A1 | 03-06-2015 | CN | 104679504 A | 03-06-2015 |
|  |  |  | DE | 102014115947 A1 | 03-06-2015 |
|  |  |  | US | 2015156057 A1 | 04-06-2015 |
| CN 101763280 | A | 30-06-2010 | CN | 101763280 A | 30-06-2010 |
|  |  |  | EP | 2169547 A1 | 31-03-2010 |
|  |  |  | US | 2010083223 A1 | 01-04-2010 |
| JP 2009009537 | A | 15-01-2009 | KEINE | | |
| US 2019340379 | A1 | 07-11-2019 | US | 2019340379 A1 | 07-11-2019 |
|  |  |  | US | 2022414252 A1 | 29-12-2022 |

EPO FORM P0461

Für nähere Einzelheiten zu diesem Anhang : siehe Amtsblatt des Europäischen Patentamts, Nr.12/82